# EUROPÄISCHE PATENTSCHRIFT

(11) **EP 0 564 432 B1**
(45) Veröffentlichungstag und Bekanntmachung des Hinweises auf die Patenterteilung: **10.07.1996**
(21) Anmeldenummer: 93890032.1
(22) Anmeldetag: 01.03.1993
(51) Int. Cl.: C21C 5/52, F27B 3/08

(54) **Verfahren zum Herstellen von Stahl aus Schrott**
Process for the production of steel from scrap
Procédé pour la production de l'acier à partir de ferailles

(30) Priorität: 31.03.1992 AT 652/92
(43) Veröffentlichungstag der Anmeldung: 06.10.1993
(73) Patentinhaber: VOEST-ALPINE INDUSTRIEANLAGENBAU GMBH, A-4020 Linz (AT)
(72) Erfinder: Berger, Harald, Dipl.-Ing. Dr., A-4020 Linz (AT)
(74) Vertreter: Pawloy, Heinrich, Dr.

(56) Entgegenhaltungen:
- DE-A- 2 738 291
- DE-B- 1 229 122
- DE-C- 3 720 886
- FR-A- 2 472 019
- REVUE DE METALLURGIE Bd. 87, Nr. 1 , Januar 1990 , PARIS FR Seiten 48 - 53 XP000126500 H.ADOLPH ET AL. 'Une nouvelle méthode pour l'utilisation de brüleurs oxycombustibles et de lances à oxygène pour optimiser la marche du four à arc.'

## Beschreibung

Die Erfindung betrifft ein Verfahren zum Herstellen von Stahl aus Schrott durch Einschmelzen des Schrottes in einem Elektro-Lichtbogenofen unter Sauerstoff- und Inertgaszuführung, wobei in einen flüssigen Sumpf aus Stahlschmelze Kalk und Kohle und darauf Schrott chargiert werden.

Ein Verfahren dieser Art ist aus der DE-C-37 20 886 bekannt. Die Gaszuführung, durch die das Schmelzen des Schrotts beschleunigt, die Zeit für das Frischen verringert und die Ausnutzung der Energie erhöht wird, erfolgt bei diesem bekannten Verfahren durch eine Vielzahl von feinen Düsenöffnungen, die im Boden des Elektro-Lichtbogenofens vorgesehen sind. Gaseinblaseinrichtungen dieser Art sind relativ kostspielig, störanfällig und wartungsintensiv. Zudem ist die Einhaltung gewisser Gaseinblasbedingungen erforderlich. So ist es notwendig, die Strömungsmenge und den Druck des eingeblasenen Gases in gewissen festgelegten Bereichen zu halten, um den einwandfreien Betrieb der Gaseinblaseinrichtung zu gewährleisten.

In Revue de Metallurgie, 87 (1990), Janvier, No.1, Paris, FR, wird von H. Adolph et al. in einem Artikel mit dem Titel "Une nouvelle methode pour l'utilisation de brûleurs oxycombustibles et de lances pour optimiser la marche du four à arc" auf Seiten 48-53 ein Verfahren zum Einblasen von Sauerstoff durch verzehrende ungekühlte Türlanzen beschrieben.

Es wurde bereits versucht, eine Gaszuführung in äußerst einfacher Weise und ohne einen großen Investitionsaufwand zu erfordern beim Schrotteinschmelzen mittels einer als Stahlrohr ausgebildeten Gaszuführungsleitung vorzunehmen, die in den Elektro-Lichtbogenofen von der Seite her durch eine Tür in den flüssigen Sumpf gehängt wird, u.zw. vor dem Chargieren des Schrotts. Zugleich mit dem Einschalten der Elektroden wird durch die Gaszuführungsleitung Sauerstoff eingeblasen. Die Zuführung des Sauerstoffs unter dem Schrott ergibt eine optimale Verbrennung der Kohle im flüssigen Sumpf. Bei dieser Praxis kommt es zu einem um etwa 10 % erniedrigten Stromverbrauch gegenüber herkömmlichen Schmelzverfahren. Durch das Chargieren des Schrotts von oben durch die Deckelöffnung nach Entfernen des von den Elektroden durchdrungenen Deckels des Elektro-Lichtbogenofens, ergibt sich eine Verformung des vor dem Chargieren des Schrotts in den flüssigen Sumpf gehängten Gaszuführungsrohres, da dieses durch das Gewicht des Schrotts an den Boden des Elektro-Lichtbogenofens gedrückt wird. Es besteht dann die Gefahr, daß die Gaszuführungsleitung in den Boden des Elektro-Lichtbogenofens hineinbrennt und diesen beschädigt.

Die Erfindung bezweckt die Vermeidung dieser Nachteile und Schwierigkeiten und stellt sich die Aufgabe, ein Verfahren sowie einen Elektro-Lichtbogenofen zur Durchführung des Verfahrens zu schaffen, welche einen gegenüber herkömmlichen Verfahren erniedrigten Stromverbrauch beim Einschmelzen von Schrott ermöglichen und nur einen geringen Investitionsaufwand erfordern. Insbesondere soll eine hohe Betriebssicherheit bei geringem Wartungsaufwand gegeben sein.

Diese Aufgabe wird erfindungsgemäß dadurch gelöst, daß vor dem Chargieren des Schrottes mindestens eine Gaszuführungsleitung von einer Ofenseite her eingebracht wird, die mit ihrer Mündung bis in die Mitte es Ofeninnenraumes des Elektro-Lichtbogenofens ragt, und daß durch diese Gaszuführungsleitung Inertgas bzw. nach Beginn des Schmelzvorganges des Schrottes Sauerstoff oder ein sauerstoffhältiges Gas unter die Schrottcharge eingeleitet wird.

Vorzugsweise wird die Gaszuführungsleitung nach Beginn des Schmelzvorganges und vor Einleiten des Sauerstoffes bzw. des sauerstoffhältigen Gases aus dem unmittelbaren Bodenbereich des Elektro-Lichtbogenofens entfernt. Hierdurch läßt sich ein Sicherheitsabstand zwischen der Mündung der Gaszuführungsleitung und dem Boden des Elektro-Lichtbogenofens einstellen, wodurch die Gefahr der Beschädigung des Bodens des Elektro-Lichtbogenofens weiter herabgesetzt wird.

Als inertes Gas wird zweckmäßig Stickstoff in einer Menge von 0,4 bis 0,8m³/t min (Normalbedingungen) eingeleitet.

Zweckmäßig wird Schrott in mehreren Schritten chargiert, wobei nach Einschmelzen des erstchargierten Schrottes der Vorgang des Chargierens von Kalk, Kohle und Schrott in dieser Reihenfolge sowie der Vorgang des Einleitens von inertem Gas und anschließend von sauerstoffhältigem Gas bzw. von Sauerstoff ein- oder mehrmals wiederholt wird.

Vorteilhaft wird das Einleiten von Sauerstoff bzw. eines sauerstoffhältigen Gases mindestens bis zum Ende des Aufschmelzens des Schrottes fortgesetzt.

Um einen fortlaufenden Betrieb des Elektro-Lichtbogenofens sicherzustellen, wird zweckmäßig beim Abstich des Elektro-Lichtbogenofens eine seinen Boden bedeckende Restschmelze belassen.

Um das Einschmelzen von Schrott weiter zu beschleunigen, kann gemäß einer bevorzugten Ausführungsform in einem Niveau oberhalb des Schmelzenbadspiegels zusätzlich von der Seite her Wärme zugeführt werden.

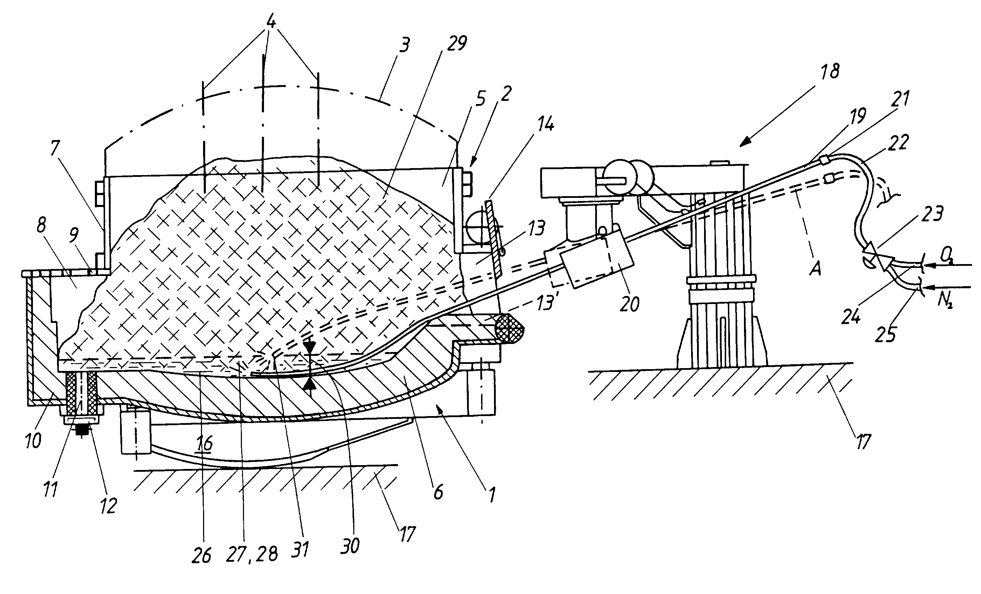

Die Erfindung ist nachfolgend anhand eines in der Zeichnung dargestellten Ausführungsbeispieles näher erläutert, die einen Elektro-Lichtbogenofen im Axialschnitt zeigt.

Der Elektro-Lichtbogenofen weist einen wannenförmigen Unterteil 1 mit angenähert kreisförmigem Grundriß und einen auf dem Unterteil 1 aufgesetzten Oberteil 2 auf, durch dessen schematisch angedeuteten Deckel 3 drei Elektroden 4 in den Ofeninnenraum 5 geführt sind. Der einen Boden darstellende wannenförmige Unterteil 1 ist mit einer feuerfesten Ausmauerung 6 versehen und weist einen den Oberteil 2 an einer Seite 7 überragenden erkerartigen Vorsprung 8, der von kühlmitteldurchflossenen Rohren 9 bedeckt ist, auf. Im Boden 10 des Vorsprunges 8 ist ein Abstichloch 11 vorgesehen, welches mittels einer nicht näher dargestellten Verschlußeinrichtung 12, wie einem Verschlußschieber, geschlossen bzw. geöffnet werden kann. Zum Zweck des Schlackenabstiches ist dem Vorsprung 8 radial gegenüberliegend an einer Manipulationsöffnung 13 eine Schlackenabflußrinne 13' am Unterteil 1 vorgesehen, die mittels einer schematisch dargestellten Ofentüre 14 verschließbar sind.

Der Unterteil 1 des Elektro-Lichtbogenofens ist über einen Wiegerahmen 16 gegenüber dem Fundament 17 kippbar gelagert. Seitlich neben der Manipulationsöffnung 13 ist am Fundament 17 eine Manipulatoreinrichtung 18 für ein Blasrohr 19 oder mehrere Blasrohre vorgesehen, mit deren Hilfe das Blasrohr 19 durch die Manipulationsöffnung 13 in den Ofeninnenraum 5 einführbar ist. Das Blasrohr 19 ist in einem Blasrohrhalter 20 der Manipulatoreinrichtung 18 eingespannt und kann mit dessen Hilfe in den Ofeninnenraum 5 gefördert bzw. zu einem beliebigen Punkt im Ofeninnenraum 5 gerichtet werden, u.zw. durch Längsverschieben des Blasrohres 19 bzw. Verschwenken des Blasrohres 19.

Am freien äußeren Ende 21 des Blasrohres 19 schließt eine Schlauchleitung 22 an, in der ein 3-Wege-Ventil 23 eingebaut ist. Mit Hilfe dieses 3-Wege-Ventils 23 läßt sich das Blasrohr 19 wahlweise mit einer Sauerstoffzuführungsleitung 24 oder einer Stickstoffzuführungsleitung 25 leitungsmäßig verbinden.

Die Funktion des Elektro-Lichtbogenofens ist nachfolgend an einem eine Einschmelzung von Schrott in einem Elektro-Lichtbogenofen mit 75 t Abstichgewicht zeigenden Beispiel näher erläutert:

Während des Abstiches oder nach dem Abstich des Elektro-Lichtbogenofens werden auf einen im Ofeninnenraum 5 verbleibenden flüssigen Sumpf 26 (ca. 12 t) ca. 1500 kg Stückkalk 27 und darauf ca. 1100 kg Stückkohle oder Koks 28 durch ein Deckelloch oder die Manipulationsöffnung 13 chargiert. Auf diese Weise wird eine Reaktion der Kohle bzw. des Kokses mit der Schlacke verhindert.

Daraufhin werden zwei 1''-Blas-Rohre 19, von denen in der Zeichnung nur eines dargestellt ist und die als Gaszuführungsleitungen dienen, durch die Manipulationsöffnung 13 so weit in den Ofeninnenraum 5 gelegt, daß sie durch den beim Öffnen des Schrottkorbes in den Elektro-Lichtbogenofen fallenden Schrott 29 parallel zum Boden 1 des Elektro-Lichtbogenofens gebogen werden, so daß die Gefahr des Einbrennens in den Boden 1 minimiert ist. Nach dem Chargieren des Schrottes (erster Korb mit 50 t) liegen die beiden 1''-Rohre somit im flüssigen Sumpf unter dem Schrott 29. Kalk 27 und Kohle 28 können in geeigneter Weise auch in den unteren Lagen des Schrottkorbes chargiert werden, wenn sichergestellt ist, daß Kalk und Kohle unter dem Schrott 29 unmittelbar mit dem flüssigen Sumpf in Berührung stehen.

Sofort nach dem Einbringen der beiden 1''-Rohre 19 werden sie mit Stickstoff mit einer Rate von 2 x 25 Nm³/min beaufschlagt, so daß ein starker Badspüleffekt entsteht, der das Schrotteinschmelzen unterstützt. Ca. 3 bis 4 min nach Einbringen des Schrottes 29 (je nach Schrottlage) werden die beiden 1''-Rohre frei beweglich und können aus dem unmittelbaren Bodenbereich entfernt und in die in der Figur für ein Blasrohr 19 mit strichlierten Linien dargestellte Lage A nach oben geschwenkt werden, in der eine Sauerstoffbeaufschlagung den Boden 1 infolge des Sicherheitsabstandes 30 der Mündungen 31 der Blasrohre 19 nicht mehr gefährden kann. Da jedes Rohr im flüssigen Bad rot bzw. weißglühend und daher weich ist und darüber hinaus beim Anheben eine Kraft auch gegen den Schrott 29 nach unten ausgeübt wird, werden sich die Rohre 19 in die in der Zeichnung dargestellte strichlierte Form biegen. Die Rohre 19 sind mit ihren Mündungen 31 bereits weit genug von der Herdoberfläche entfernt, so daß die Gefahr des "Brennens in den Herd" nicht mehr gegeben ist.

Mittels des 3-Wege-Umschaltventils 23 wird anschließend von Stickstoffzuführung auf Sauerstoffzuführung umgeschaltet und der inzwischen gelöste Kohlenstoff nunmehr mit Sauerstoff (2 x 25 Nm³/min) zu CO verbrannt. Dieses bewirkt eine entsprechend starke Spülwirkung im Bad. Das Sauerstoffblasen wird während des gesamten Schrotteinschmelzvorganges etwa für weitere 14 min aufrecht erhalten. Beim Einschmelzen des Schrottes des zweiten Korbes wird analog vorgegangen. Nachdem ca. 1100 kg Stückkalk und ca. 700 kg Stückkohle - eventuell schon zum Ende des Einschmelzens des Schrottes des ersten Korbes - gesetzt worden sind, wird der Schrott des zweiten Korbes (33 t) chargiert. Die beiden 1''-Rohre sind im Bad belassen worden und werden zu Beginn des Einschmelzens des Schrottes des zweiten Korbes wieder für 3 bis 4 min mit 2 x 25 Nm³/min Stickstoff beaufschlagt. Dann wird abermals mittels des 3-Wege-Ventiles 23 auf Sauerstoff (2 x 25 Nm³/min) umgeschaltet und ca. 10 min lang Sauerstoff geblasen, bevor die Schmelze fertig gemacht wird. Dazwischen erfolgt noch eine Kalkgabe von 400 kg.

Durch das Einblasen von Stickstoff in einer Rate von 0,66 Nm³/t min in den flüssigen Sumpf unter den Schrott 29 wird ein ähnlicher einschmelzfördernder Vorgang im Flüssigsumpf ausgelöst wie bei einem Spülstein im Herd.

Zusätzlich kommt es zu einer Kühlung der feuerfesten Ausmauerung des Herdes 6 bei gleichzeitiger Schonung derselben. Sobald es ohne Gefährdung des Elektro-Lichtbogenofens möglich ist, wird der Einschmelzvorgang durch Verbrennung von Kohle 28 unter dem Schrott 29 durch Sauerstoff optimal unterstützt.

## Patentansprüche

1. Verfahren zum Herstellen von Stahl aus Schrott (29) durch Einschmelzen des Schrottes (29) in einem Elektro-Lichtbogenofen unter Sauerstoff- und Inertgaszuführung, wobei in einen flüssigen Sumpf (26) aus Stahlschmelze Kalk (27) und Kohle (28) und darauf Schrott (29) chargiert werden, dadurch gekennzeichnet, daß vor dem Chargieren des Schrottes (29) mindestens eine Gaszuführungsleitung (19) von einer Ofenseite her eingebracht wird, die mit ihrer Mündung (31) bis in die Mitte des Ofeninnenraumes (5) des Elektro-Lichtbogenofens ragt, und daß durch diese Gaszuführungsleitung (19) Inertgas bzw. nach Beginn des Schmelzvorganges des Schrottes Sauerstoff oder ein sauerstoffhältiges Gas unter die Schrottcharge eingeleitet wird.

2. Verfahren nach Anspruch 1, dadurch gekennzeichnet, daß die Gaszuführungsleitung (19) nach Beginn des Schmelzvorganges und vor Einleiten des Sauerstoffes bzw. des sauerstoffhältigen Gases aus dem Bodenbereich des Elektro-Lichtbogenofens entfernt wird, so daß ein Sicherheitsabstand zum Ofenboden (1) eingestellt wird.

3. Verfahren nach Anspruch 1 oder 2, dadurch gekennzeichnet, daß als inertes Gas Stickstoff in einer Menge von 0,4 bis 0,8 m³/t min (Normalbedingungen) eingeleitet wird.

4. Verfahren nach einem oder mehreren der Ansprüche 1 bis 3, dadurch gekennzeichnet, daß nach Einschmelzen des erstchargierten Schrottes (29) der Vorgang des Chargierens von Kalk (27), Kohle (28) und Schrott (29) in dieser Reihenfolge sowie der Vorgang des Einleitens von inertem Gas und anschließend von sauerstoffhältigem Gas bzw. von Sauerstoff ein- oder mehrmals wiederholt wird.

5. Verfahren nach einem oder mehreren der Ansprüche 1 bis 4, dadurch gekennzeichnet, daß das Einleiten von Sauerstoff bzw. eines sauerstoffhältigen Gases mindestens bis zum Ende des Aufschmelzens des Schrottes (29) fortgesetzt wird.

6. Verfahren nach einem oder mehreren der Ansprüche 1 bis 5, dadurch gekennzeichnet, daß in einem Niveau oberhalb des Schmelzenbadspiegels zusätzlich von der Seite her Wärme zugeführt wird.

## Revendications

1. Procédé de fabrication d'acier à partir de grenaille (29) par fusion de la grenaille (29) dans un four à arc électrique sous apport d'oxygène et d'un gaz inerte, de la chaux (27) et du charbon (28) et ensuite de la grenaille (29) étant chargés dans un fond liquide (26) d'acier fondu, caractérisé en ce qu'avant le chargement de la grenaille (29) on introduit par un côté du four au moins une conduite d'arrivée de gaz (19) qui parvient par son orifice (31) jusqu'au centre de l'intérieur (5) du four à arc électrique et en ce qu'on envoie par cette conduite d'arrivée de gaz (19) un gaz inerte ou, après le début de l'opération de fusion de la grenaille, de l'oxygène ou un gaz oxygéné sous la charge de grenaille.

2. Procédé selon la revendication 1, caractérisé en ce que la conduite d'arrivée de gaz (19) est retirée de la zone du fond du four à arc électrique après le début de l'opération de fusion et avant l'envoi de l'oxygène ou du gaz oxygéné, de sorte qu'est ajustée une distance de sécurité par rapport au fond (1) du four.

3. Procédé selon la revendication 1 ou 2, caractérisé en ce qu'on envoie comme gaz inerte de l'azote en une quantité de 0,4 à 0,8 m³/t.min (conditions normales).

4. Procédé selon une ou plusieurs des revendications 1 à 3, caractérisé en ce qu'après la fusion de la grenaille (29) chargée en premier lieu, on répète une ou plusieurs fois l'opération de chargement de chaux (27), de charbon (28) et de grenaille (29) dans cet ordre, ainsi que l'opération d'envoi de gaz inerte et ensuite de gaz oxygéné ou d'oxygène.

5. Procédé selon une ou plusieurs des revendications 1 à 4, caractérisé en ce que l'envoi d'oxygène ou d'un gaz oxygéné est poursuivi au moins jusqu'à la fin de la fusion de la grenaille (29).

6. Procédé selon une ou plusieurs des revendications 1 à 5, caractérisé en ce que de la chaleur est apportée additionnellement par un côté à un niveau supérieur à la surface du bain de fusion.

## Claims

1. A method of producing steel from scrap (29) by melting the scrap (29) in an electric arc furnace under supply of oxygen and inert gas, wherein lime (27) and coal (28) and thereupon scrap (29) are charged into a liquid sump (26) of steel melt, characterised in that prior to charging the scrap (29), at least one gas supply duct (19) is introduced from one furnace side, the mouth (31) of this gas supply duct projecting into the center of the furnace interior (5) of the electric arc furnace, and that inert gas and, after the onset of the melting procedure of the scrap, oxygen or an oxygen-containing gas are introduced through this gas supply duct (19) to below the scrap charge.

2. A method according to claim 1, characterised in that the gas supply duct (19) is removed from the bottom region of the electric arc furnace after the onset of the melting procedure and prior to the introduction of oxygen or oxygen-containing gas, so that a safety distance from the furnace bottom (1) is adjusted.

3. A method according to claim 1 or 2, characterised in that nitrogen in an amount of from 0.4 to 0.8 m³/t min (normal conditions) is introduced as said inert gas.

4. A method according to one or several of claims 1 to 3, characterised in that after melting of the first-charged scrap (29), the procedure of charging lime (27), coal (28) and scrap (29) is repeated in this order as well as the procedure of introducing inert gas and subsequently oxygen-containing gas or oxygen, respectively, is repeated, once or several times.

5. A method according to one or several of claims 1 to 4, characterised in that the introduction of oxygen or oxygen-containing gas, respectively, is continued at least until the end of the melting of the scrap (29).

6. A method according to one or several of claims 1 to 5, characterised in that heat is additionally supplied from the side, at a level above the meniscus of the melt bath.
